# EUROPÄISCHE PATENTSCHRIFT

(11) **EP 2 603 392 B1**
(45) Veröffentlichungstag und Bekanntmachung des Hinweises auf die Patenterteilung: **22.10.2014**
(21) Anmeldenummer: 11744012.3
(22) Anmeldetag: 12.08.2011
(51) Int. Cl.: B60K 15/04

(54) **DECKELLOSER EINFÜLLSTUTZEN**
CAPLESS FILLER NECK
GOULOT DE REMPLISSAGE SANS COUVERCLE

(30) Priorität: 12.08.2010 DE 102010036970
(43) Veröffentlichungstag der Anmeldung: 19.06.2013
(73) Patentinhaber: Gerdes GmbH, 50170 Kerpen (DE)
(72) Erfinder: RALF, Gerdes, 50937 Köln (DE)
(74) Vertreter: Bungartz, Klaus Peter
(86) Internationale Anmeldenummer: PCT/EP2011/063955
(87) Internationale Veröffentlichungsnummer: WO 2012/020128

(56) Entgegenhaltungen:
- EP-A1- 1 329 353
- WO-A2-2009/135954
- US-A1- 2007 000 574
- US-A1- 2009 189 106

## Beschreibung

### Technisches Gebiet

Die Erfindung betrifft einen deckellosen Einfüllstutzen mit verzögert schließender Verschlussklappe für einen Stutzen eines Behälters, insbesondere eines Tanks eines Kraftfahrzeugs mit einem längst einer Stutzenachse verlaufenden Rohrstück und einem Verschlussmechanismus, der eine obere Verschlussklappe und eine darunter angeordnete untere Verschlussklappe aufweist, wobei zumindest die untere Verschlussklappe als dichtende Klappe ausgebildet ist und die obere Verschlussklappe und die untere Verschlussklappe durch das Einführen eines Füllrohres in das Rohrstück gegen eine Rückstellkraft zum Öffnen des Verschlussmechanismus aufstoßbar sind.

### Stand der Technik

Deckellose Einfüllstutzen mit verzögert schließender Verschlussklappe dieser Art sind aus der WO 2009/135954 A (GERDES GMBH) 12.11.2009 bekannt. Es handelt sich hierbei um Einfüllstutzen, die mit den beiden Verschlussklappen auch ohne gesonderten Tankdeckel den Einfüllstutzen eines Kraftstofftanks sicher verschließen. Hierbei werden die beiden Verschlussklappen durch das Rohrende einer Zapfpistole oder eines Nachfüllkanisters, nachfolgend mit allgemeinen mit Füllrohr bezeichnet, aufgestoßen, wobei üblicherweise Sicherheitsmechanismen vorhanden sind, wie ein unbeabsichtigtes Öffnen verhindern. Erst wenn beide Verschlussklappen geöffnet sind, kann der Tank gefüllt werden.

Der Nachteil der bekannten Einfüllstutzen kann darin bestehen, dass der Benutzer schon bei nur teilweise eingeführtem Füllrohr oder nach dem Tanken bei bereits teilweise herausgezogenem Füllrohr schon oder noch versucht, Kraftstoff einzufüllen. Insbesondere für den Fall, dass die untere Verschlussklappe als dichtende Klappe ausgeführt ist, kann dann aber Kraftstoff oberhalb der bereits geschlossenen unteren Verschlussklappe in dem Rohrstutzen eingefüllt werden, der dann nicht mehr nach unten in den Tank abfließen kann. Dies führt dazu, dass der Kraftstoff über die Entlüftung Systeme in die Umgebung gelangen kann, was aus ökologischen Gründen nicht erwünscht ist.

Aus der US 2009/0189106 A1 ist ein Stutzenabschluss bekannt, der einen oberen Stellhebel aufweist, über den die eigentliche Verschlussklappe geöffnet werden kann. Dieser Stutzenabschluss weist jedoch nur eine obere Dichtklappe auf, jedoch keine darunter angeordnete untere Dichtklappe.

Aus der EP 1 329 353 A1 ist ein Stutzenabschluss bekannt, der eine doppelte Dichtklappe aufweist, wobei die obere Dichtklappe und die untere Dichtklappe über ein Hebelgetriebe miteinander verbunden sind. Diese Vorrichtung hat zwar den Vorteil, dass zwei Dichtklappe vorhanden sind und die untere Verschlussklappe solange geöffnet bleibt, bis sich die obere Verschlussklappe schließt, jedoch weisen die Klappen wegen der zeitgleichen Öffnung keine hinreichende doppelte Sicherheit gegen Beschädigung im Unfallfall auf, da sich die untere Verschlussklappe nicht unabhängig von der oberen Verschlussklappe schließen kann.

### Kurzbeschreibung der Erfindung

Aufgabe der Erfindung ist es daher, einen Stutzenabschluss zu schaffen, der auch bei Betätigung der Zapfpistole nach teilweise Herausziehen aus dem Stutzenabschluss möglichst lange gewährleistet, dass der übertankte Kraftstoff in den Tank fließt.

Diese Aufgabe wird nach der Erfindung dadurch gelöst, dass die obere Verschlussklappe derart ausgebildet und gelagert ist, dass sie sich bei geschlossener oberer Verschlussklappe und längs eines ersten Schwenkweges nicht im unmittelbaren oder mittelbaren Kontakt zur unteren Verschlussklappe befindet und längs eines, sich an den ersten Schwenkweg anschließenden zweiten Schwenkweges mit einem Kraftübertragungsabschnitt derart auf einen Druckbereich der unteren Verschlussklappe im Abstand zur deren Schwenkachse auf den beweglichen Teil der unteren Verschlussklappe abstützt, dass diese auch ohne Einfluss des Füllrohres zumindest um einige Winkelgrade geöffnet ist, während die obere Verschlussklappe längs des zweiten Schwenkweges bewegt ist.

Eine weitere Lösung dieser Aufgabe stellt ein Stutzenabschluss mit den Merkmalen des Anspruchs 10 dar. In allen Fällen ist die untere Verschlussklappe eine Schwenkklappe, die an sich, mit Ausnahme des verzögerten Schließens nach der vorliegenden Erfindung, unabhängig von der oberen Verschlussklappe von dem Füllrohr der Zapfpistole aufgestoßen wird, wenn dieses in den Tank eingeführt wird..

Durch die erfindungsgemäße Ausgestaltung des Stutzenabschluss kann nun die untere Verschlussklappe über einen längeren Zeitraum geöffnet bleiben. Während bei der bekannten Ausgestaltung die untere Verschlussklappe sofort nach Verlassen des unteren Randes der Zapfpistole aus dem Schwenkbereich der unteren Verschlussklappe schließt und damit abdichtet, bleibt nun die untere Verschlussklappe Kraftstoffmenge sicher nach unten ablaufen zu lassen. Dies liegt daran, dass erfahrungsgemäß die volle Pumpleistung der Zapfpistole nur dann abgerufen wird, werden sich diese vollständig im Stutzen befindet.

Der Benutzer neigt allerdings dazu, beim Herausziehen der Zapfpistole entweder noch einmal kurz den Zuführschlauch auszuleeren oder noch einen kleinen Rest nachzutanken, um den Tank vermeintlich vollständig zu füllen. Dieser "Nachtankvorgang" wird allerdings üblicherweise vorsichtig und damit mit geringer Pumpleistung der Zapfsäule ausgeführt, so dass ein geringer Öffnungswinkel der unteren Verschlussklappe ausreichend ist, um den nachgetankten Kraftstoff noch ablaufen zu lassen, bis sich dann die untere Verschlussklappe dichtend schließt.

Wesentliches Merkmal der Erfindung ist die Tatsache, dass die obere Verschlussklappe oder ein Hilfselement zwischen der oberen Verschlussklappe und der unteren Verschlussklappe infolge des teilweise eingeschobenen Füllrohres bewirkt, dass die durch die Kraft einer Feder in Verschlussstellung gedrängte untere Verschlussklappe noch eine gewisse Zeit geöffnet bleibt. Diese Zeit wird durch die mechanische Wirkung des unteren Bereiches des Füllrohres der Zapfpistole bestimmt, solange sich dieser zwischen den beiden Verschlussklappen befindet. Erfindungsgemäß wird also mechanisch die untere Verschlussklappe über einen von der Zapfpistole betätigten Hebel nach unten gedrückt.

Nach dem in vielen Fällen gefordert ist, dass die beiden Verschlussklappen voneinander unabhängig sind, ist es nicht möglich, die beiden Verschlussklappen unmittelbar miteinander zu koppeln, so dass ein Druck auf die obere Verschlussklappe auch unmittelbar einen Druck auf die untere Verschlussklappe auslöst.

Die Erfindung löst dieses Problem nun dadurch, dass zunächst ein erster Schwenkbereich zur Verfügung steht, über den die obere Verschlussklappe durch das eingesteckte Füllrohr schwenkbar ist, oder dass sich die untere Verschlussklappe bewegt. An diesen ersten Schwenkbereich schließlich nun ein zweiter Schwenkbereich an, über den die weitere Schwenkbewegung der oberen Verschlussklappe einen unmittelbaren Druck oder einen mittelbaren Druck auf die untere Verschlussklappe in dem Sinne ausgeübt, dass sich die untere Verschlussklappe zumindest um einige Winkelgrade öffnet und so flüssigkeitsdurchlässig wird.

Im Sinne der oben genannten Funktion bedeutet ein mittelbares Öffnen, dass die obere Verschlussklappe über ein zusätzliches Betätigungsglied einen Druck auf die untere Verschlussklappe ausgeübt. Unter unmittelbarem Öffnen soll im Sinne der Erfindung verstanden werden, dass die obere Verschlussklappe mit einem Abschnitt unmittelbar gegen die untere Verschlussklappe gedrängt wird und somit die Öffnungskraft, die zur Überwindung der Rückstellkraft notwendig ist, selbst auf die untere Verschlussklappe aufbringt.

Abstrakt betrachtet weist also die obere Verschlussklappe einen Kraftübertragungsabschnitt auf beziehungsweise drückt einen Kraftübertragungsabschnitt eines separaten Betätigungsgliedes nach unten in den Stutzen in Richtung der unteren Verschlussklappe, wobei sich der Kraftübertragungsabschnitt dann auf einen Druckbereich der unteren Verschlussklappe diese verdrängend abstützt.

Damit die Öffnungskraft beziehungsweise aus Sicht der Schwenkachse gesehen das Öffnungsmoment aufgebracht werden kann, muss der Druckbereich im Abstand zur Schwenkachse in Richtung der Stutzenachse angeordnet sein, so dass ein Öffnungsmoment durch den Druck des Kraftübertragungsabschnitts aufgebracht werden kann. Dabei ist es unerheblich, ob sich die Verschlussklappen gleichsinnig oder gegenseitig öffnen, also an unterschiedlichen Seiten des Rohrstückes angelenkt sind. Auch müssen die Verschlussklappen nicht eben ausgebildet sein, im Gegenteil, üblicherweise werden sie einen inneren Klappenraum aufweisen, in dem zum Beispiel Über- und Unterdruckventile angeordnet sind.

Die Verschlussklappen können so geformt sein, dass die Öffnung der unteren Verschlussklappe über einen möglichst großen Schwenkbereich erhalten bleibt. Bei einer bevorzugten Ausgestaltung ist die obere Verschlussklappe mit einem Klappenkörper versehen, der im Wesentlichen zylindrisch ausgebildet ist und seitlich im unteren Bereich hervorspringend einen Flansch aufweist, auf dem, den Klappenkörper umringend, die Dichtung der unteren Verschlussklappe angeordnet ist. Diese Dichtung wird dann bei Schließen der unteren Verschlussklappe gegen einen korrespondierenden Rand des Stutzens gedrückt.

Die Schwenkachse ist etwas oberhalb des Flansches angeordnet. Bei dieser Ausgestaltung bildet der der Schwenkachse gegenüber liegende Teil des Flansches den Kraftübertragungsbereich. Dies bedeutet, dass die Unterseite des Flansches bei Öffnen der oberen Verschlussklappe um die Schwenkachse über den ersten Schwenkweg hinaus gegen den Druckbereich der unteren Verschlussklappe stößt und bei weiterer Schwenkbewegung in Öffnungsrichtung die untere Verschlussklappe nach unten drückt und so zumindest geringfügig öffnet.

Die obere Verschlussklappe kann an ihrer Oberseite eben ausgeführt sein. Es ist allerdings auch möglich, dass sie an ihrer Oberseite eine Erhebung aufweist, so dass schon vor der Querschnittsebene des Rohrstücks, in der sich die Schwenkachse befindet, ein Kontakt zwischen dem Füllrohr der Zapfpistole unter der oberen Verschlussklappe eintritt. Dies hat den Effekt, dass die obere Verschlussklappe früher heruntergedrückt wird und sich umgekehrt auch später schließt. Dies wiederum bedeutet, dass die Öffnung beziehungsweise das Schließen der unteren Verschlussklappe infolge der nach Abfahren des ersten Schwenkweges eintretenden Kontaktkraft früher beziehungsweise später eintritt.

Auf ähnliche Weise kann die untere Verschlussklappe über die Variation ihrer Oberflächenform dafür Sorge tragen, dass sie früher oder später in Kontakt mit der nach unten geschwenkten oberen Verschlussklappe kommt. Der Druckbereich der unteren Verschlussklappe kann hierzu entsprechend ausgebildet sein. Wesentlich für die zeitliche Abfolge der Öffnung der beiden Verschlussklappen ist lediglich die Tatsache, wann sich die Bewegungslinien beider Klappen treffen.

Eine alternative Ausgestaltung der Erfindung verwendet ein zusätzliches Bauteil. Dieses Bauteil kann beispielsweise als Kniehebel ausgebildet sein und innerhalb des Rohrstückes zwischen der oberen Verschlussklappe und der unteren Verschlussklappe als Betätigungsmittel für die vorzeitige Öffnung der unteren Verschlussklappe vorgesehen sein. Ein solcher Kniehebel kann beispielsweise als Hebel ausgebildet sein, der mit einem Ende an dem Rohrstück gelenkig gelagert ist.

Das gegenüberliegende, freie Ende des Hebels ragt dann in Richtung der Stutzenachse und in die Bewegungsbahn der Zapfpistole, so dass die eingeschobene Zapfpistole den Hebel nach unten drückt. Bei geeigneter Anordnung und Länge des Hebels stößt dieser mit seinem freien Ende dann auf die Druckfläche der unteren Verschlussklappe und stößt diese, wie oben im Zusammenhang mit der oberen Verschlussklappe bereits beschrieben, auf. Auch hier kann die Geometrie des Hebels sowie der unteren Verschlussklappe die Öffnungszeiten optimieren.

Alternativ zu einem Hebel kann auch ein hohlzylindrisches Element verschiebbar zwischen den beiden Verschlussklappen vorgesehen sein, dass nach einem gewissen Öffnungswinkel der oberen Verschlussklappe entweder von der Zapfpistole oder der oberen Verschlussklappe nach unten gedrückt wird und die untere Verschlussklappe geringfügig öffnet.

Weitere Merkmale und Vorteile der Erfindung ergeben sich aus den Unteransprüchen und aus der nachfolgenden Beschreibung eines bevorzugten Ausführungsbeispiels anhand der Zeichnungen.

### Kurze Beschreibung der Zeichnungsfiguren

In der Zeichnungen zeigt
Figur 1 eine Schnittansicht eines erfindungsgemäßen Stutzenabschlusses und
Figur 2 schematisch eine alternative Ausgestaltung der Erfindung.

### Beschreibung der Ausführungsarten

Der Stutzenabschluss weist im oberen Bereich seines Rohrstücks 1 einen Einfädeltrichter zum Einsetzen des Füllrohrs 4 einer Zapfpistole auf. Darunter ist die obere Verschlussklappe 2 vorgesehen. Diese obere Verschlussklappe 2 ist um eine Schwenkachse S schwenkbar gelagert und kann durch die eingeführte Zapfpistole aufgestoßen werden. Im unteren Bereich weist die obere Verschlussklappe 2 einen, eine Dichtung tragenden Flansch auf.

Der Flansch der Verschlussklappe 2 bewegt sich mit seinem der Schwenkachse S abgewandten Rand längs einer Kreisbahn. Diese Bewegungslinie verläuft zunächst kreisförmig von einer seitlichen Position ausgehend von oben nach unten um die Schwenkachse S. Nach einem ersten Winkelabschnitt der Bewegungslinie ist ein erster Schwenkweg durchlaufen, während dessen die obere Verschlussklappe 2 noch nicht in Kontakt mit der unteren Verschlussklappe 3 kommt. Dies stellt sicher, dass beide Klappen 2,3 unabhängig voneinander arbeiten und beide jeweils den Stutzen abdichten können.

Erst nach Durchlaufen des ersten Schwenkwegs stößt die obere Verschlussklappe 2 an die Oberseite der unteren Verschlussklappe 3. Da die weitere Bewegungslinie des in der Zeichnung rechten Randes des Flansches, also desjenigen Randes, der der Schwenkachse S gegenüberliegt, die Ebene der Oberseite der unteren Verschlussklappe 3 kreuzt, wird durch ein weiteres Öffnen der oberen Verschlussklappe 2 auch in die untere Verschlussklappe 3 leicht geöffnet, ohne dass das Füllrohr 4 der Zapfpistole in Kontakt mit der unteren Verschlussklappe 3 kommen müsste.

Auf gleiche Weise schließt sich die untere Verschlussklappe 3 auch erst dann, wenn sich die obere Verschlussklappe 2 in den Bereich des ersten Schwenkwegs zurückbewegt hat, was erst geschieht, wenn das Füllrohr 4 der Zapfpistole vergleichsweise weit aus dem Rohrstück 1 herausgezogen ist. Im Vergleich zu früheren Ausgestaltung, bei denen sich die untere Verschlussklappe 3 bereits schloss, wenn der Kontakt zwischen dem Füllrohr 4 der Zapfpistole und der unteren Verschlussklappe 3 verloren gegangen ist, tritt nun wieder Schließvorgang wesentlich später ein, so dass noch aus der Zapfpistole rinnender Kraftstoff durch die untere Verschlussklappe 3 in den Tank laufen kann. So wird vermieden, dass sich eine größere Menge Kraftstoff zwischen den beiden Verschlussklappen 2,3 sammelt oder über die Entlüftung des Tanksystems in die Umgebung gelangt.

Damit die obere Verschlussklappe 2 die unsere Verschlussklappe 3 aufstoßen kann, weist die obere Verschlussklappe 2 im beschriebenen Bereich des Flansches einen Kraftübertragungsbereich 5 auf, der sich bei Erreichen des zweiten Schwenkweges auf einen Druckbereich 6 der unteren Verschlussklappe abstützt.

Der Druckbereich kann grundsätzlich von jedem Teil der unteren Verschlussklappe 3 gebildet sein, der in Kontakt mit dem Kraftübertragungsabschnitt 5 kommen kann.

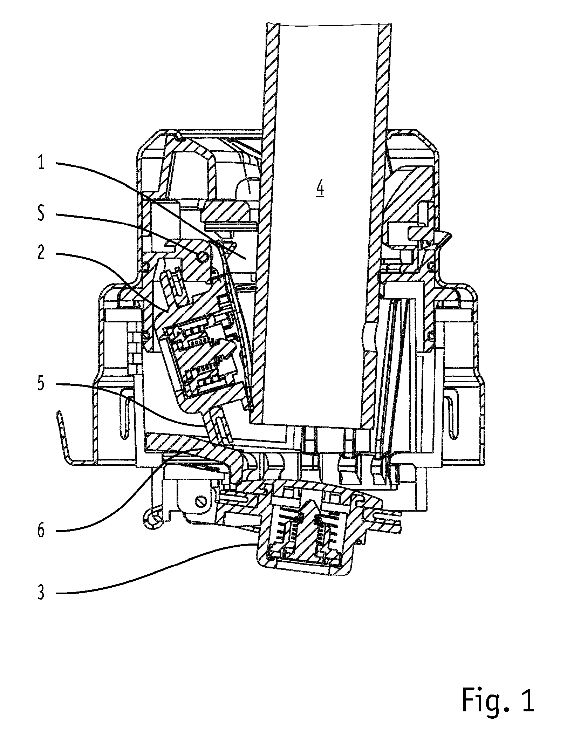

Eine besonders bevorzugte Ausgestaltung ist jedoch die in der Figur 1 Dargestellte: Hier liegt der Schwenkbereich der oberen Verschlussklappe mit Ausnahme des Kraftübertragungsabschnitts 5 außerhalb der unteren Verschlussklappe 3. Auch der Kraftübertragungsabschnitt 5 drückt hier nicht auf die untere Verschlussklappe 3 selbst, sondern auf den außerhalb des dichtenden Bereichs angeordneten Druckbereich 6, der hier als radial nach außen über die Schwenkachse S in die der unteren Verschlussklappe 3 entgegengerichtete Richtung hinaus gerichtete Verlängerung der unteren Verschlussklappe 2 ausgebildet ist. Dies ermöglicht es, dass die untere Verschlussklappe tiefer im Rohrstützen angeordnet werden kann, da die Abstände der Schwenkbewegungen bzw. Radien durch den Kraftübertragungsabschnitt 5 und den Druckbereich 6 ausgeglichen werden.

Dies ist unter anderem auch deswegen wichtig, weil die untere Verschlussklappe 3 zwar in Reichweite des Füllrohres liegen muss, aber innerhalb dieser Reichweite möglichst tief angeordnet sein sollte, damit sie als dichtende Klappe vor Unfalleinflüssen, die auf die Karosserie einwirken, möglichst gut geschützt ist. Durch den Kraftübertragungsabschnitt, der die obere Verschlussklappe radial auf der der Schwenkachse abgewandten Seite verlängert und durch den optionalen Druckbereich, der die Druckfläche zum leichten Aufstoßen zusätzlich oder alternativ nach oben verlagert, kann nun die untere Verschlussklappe 3 optimal platziert werden und dennoch als von der Schwenkbewegung der oberen Verschlussklappe 2 unabhängig zu öffnende Klappe ausgebildet sein. Dies bedeutet, dass selbst dann, wenn die obere Verschlussklappe beschädigt ist oder ganz fehlt, der Rohrstutzen einerseits abgedichtet, aber zum Beispiel zur Entleerung zugänglich bleibt.

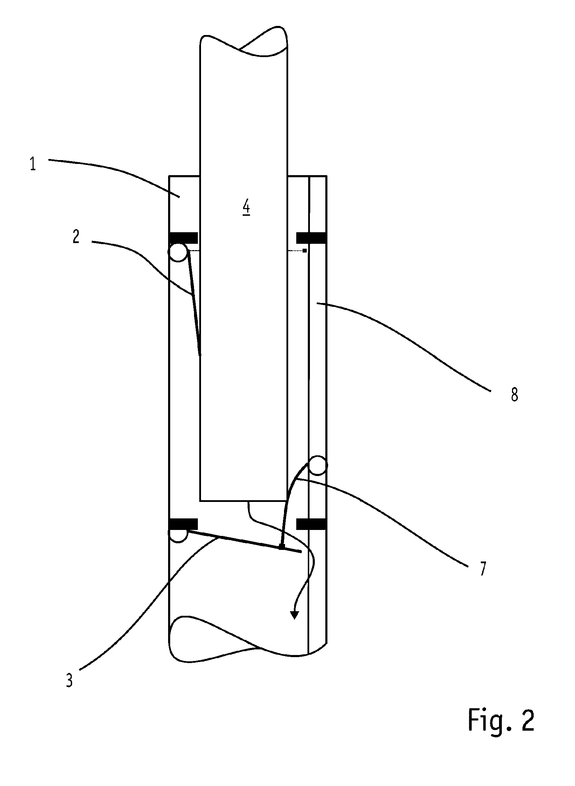

In Figur 2 ist eine Variante der Erfindung dargestellt. Hier wird die untere Verschlussklappe 3 nicht von der oberen Verschlussklappe 2 sondern einem Hilfsbauteil in Form eines Öffnungshebels 7 aufgehalten. Neben diesem, Öffnungshebel 7 befindet sind eine Aufnahmenut 8, in die der Hebel durch das Füllrohr 4 verdrängt werden kann und in der sich auch das Schwenklager befindet. Je nach lokalen Platzverhältnissen kann auf eine solche Aufnahmenut 8 aber auch verzichtet werden.

Der Öffnungshebel 7 ist hier gebogen, um die untere Verschlussklappe 3 aufhalten zu können. Anstelle der dargestellten Krümmung kann er auch winklig, insbesondere rechtwinklig ausgebildet sind.

Bei allen Ausgestaltungen der Erfindung bleibt die untere Verschlussklappe 3 durch die erfindungsgemäße Ausgestaltung eine bestimmte Zeit lang geöffnet, so dass aus dem Füllrohr 4 noch herausfließender Kraftstoff durch diese Öffnung in den Tank fließen kann, wie in Figur 2 durch den Pfeil schematisch dargestellt.

### Liste der Bezugszeichen

1 Rohrstück
2 Obere Verschlussklappe
3 Untere Verschlussklappe
4 Füllrohr
5 Kraftübertragungsabschnitt
6 Druckbereich
7 Öffnungshebel
8 Aufnahmenut
S Schwenkachse

## Patentansprüche

1. Deckelloser Einfüllstutzen für einen Stutzen eines Behälters, insbesondere eines Tanks eines Kraftfahrzeugs mit einem längst einer Stutzenachse (S) verlaufenden Rohrstück (1) und einem Verschlussmechanismus, der eine obere Verschlussklappe (2) und eine im Abstand hierzu darunter angeordnete, als dichtende Klappe ausgebildete untere Verschlussklappe (3) aufweist, wobei die obere Verschlussklappe (2) und die untere Verschlussklappe (3) zum Öffnen jeweils um eine Schwenkachse schwenkbar gelagert sind und durch das Einführen eines Füllrohres (4) in das Rohrstück (1) gegen eine Rückstellkraft zum Öffnen des Verschlussmechanismus schwenkbar sind, **dadurch gekennzeichnet, dass** die obere Verschlussklappe derart ausgebildet und gelagert ist, dass sie sich bei geschlossener oberer Verschlussklappe (2) und längs eines ersten Schwenkweges nicht im unmittelbaren oder mittelbaren Kontakt zur unteren Verschlussklappe (3) befindet und längs eines, sich an den ersten Schwenkweg anschließenden zweiten Schwenkweges mit einem Kraftübertragungsabschnitt (5) derart auf einen Druckbereich (6) der unteren Verschlussklappe (3) im Abstand zur deren Schwenkachse (S) auf den beweglichen Teil der unteren Verschlussklappe (3) abstützt, dass diese auch ohne Einfluss des Füllrohres (4) zumindest um einige Winkelgrade geöffnet ist, während die obere Verschlussklappe (2) längs des zweiten Schwenkweges bewegt ist.

2. Deckelloser Einfüllstutzen mit verzögert schließender Verschlussklappe nach Anspruch 1, **dadurch gekennzeichnet, dass** die obere Verschlussklappe eine Breite aufweist, die größer ist als der Abstand der Schwenkachse der oberen Verschlussklappe (2) zum Druckbereich (6) der unteren Verschlussklappe (3) und der der Schwenkachse gegenüberliegende Randbereich der oberen Verschlussklappe (2) den Kraftübertragungsabschnitt (5) bildet, wobei während der Schwenkbewegung der oberen Verschlussklappe (2) der den Kraftübertragungsabschnitt (5) bildende Randbereich längs einer Teilkreisbahn bewegt ist und der zum Druckbereich (6) von der Teilkreisbahn geschnitten wird oder oberhalb der Teilkreisbahn liegt, so dass die obere Verschlussklappe ab einer Stellung zwischen dem geschlossenen Zustand und dem maximalen Öffnungswinkel auf den Druckbereich (6), diesen nach unten verdrängend und die untere Verschlussklappe (3) teilweise öffnend drückt.

3. Deckelloser Einfüllstutzen mit verzögert schließender Verschlussklappe nach einem der beiden vorhergehenden Ansprüche, **dadurch gekennzeichnet, dass** zwischen der oberen Verschlussklappe (2) und der unteren Verschlussklappe (3) ein verschiebbar am Rohrstück (1) gelagertes Druckelement, insbesondere in Form eines Kraftübertragungsstiftes oder einer Kraftübertragungshülse, angeordnet ist, wobei die obere Verschlussklappe (2) im Verlaufe der Schwenkbewegung den Anschlag an das Druckelement gerät und dieses dann während der weiteren Schwenkbewegung in Öffnungsrichtung nach unten drückt, und wobei die untere Verschlussklappe (3) derart ausgebildet und angeordnet ist, das das von der oberen Verschlussklappe (2) nach unten verdrängte Druckelement die untere Verschlussklappe (3) zumindest geringfügig in Öffnungsrichtung verschwenkt und damit geringfügig öffnet.

4. Deckelloser Einfüllstutzen mit verzögert schließender Verschlussklappe nach einem der vorhergehenden Ansprüche, **dadurch gekennzeichnet, dass** die obere Verschlussklappe (2) im Bereich der Auftrefffläche des eingesteckten Füllrohrs (4) eine Erhebung in Form einer konvexen Oberfläche oder eines nach oben abstehenden stiftförmigen Verdrängungsmittels aufweist, so dass die obere Verschlussklappe (2) über einen größeren Verschiebeweg des Füllrohrs (4) geöffnet bleibt und die untere Verschlussklappe (3) gleichzeitig geringfügig offen hält.

5. Deckelloser Einfüllstutzen mit verzögert schließender Verschlussklappe nach einem der vorhergehenden Ansprüche, **dadurch gekennzeichnet, dass** die obere Verschlussklappe (2) einen Klappenkörper aufweist, der umlaufend mit einem seitlich hervorspringenden Flansch versehen ist, an dessen Oberseite eine Dichtung für die obere Verschlussklappe (2) angeordnet ist, wobei der, der Schwenkachse gegenüberliegende Bereich des Flansches mit seiner Unterseite den Kraftübertragungsabschnitt (5) bildet.

6. Deckelloser Einfüllstutzen mit verzögert schließender Verschlussklappe nach dem vorhergehenden Anspruch, **dadurch gekennzeichnet, dass** ein Druckstück vorgesehen ist, das an einer Oberseite die Druckfläche (6) zum Abstützen des Kraftübertragungsabschnittes (5) aufweist und mit einem Kraftübertragungsglied auf den beweglichen Teil der unteren Verschlussklappe (3) im Abstand zu deren Schwenkachse drückt.

7. Deckelloser Einfüllstutzen mit verzögert schließender Verschlussklappe nach dem vorhergehenden Anspruch, **dadurch gekennzeichnet, dass** das Druckstück schwenkbaren im Rohrstück (1) gelagert ist.

8. Deckelloser Einfüllstutzen mit verzögert schließender Verschlussklappe nach einem der vorhergehenden Ansprüche, **dadurch gekennzeichnet, dass** die obere Verschlussklappe (2) und die untere Verschlussklappe (3) jeweils um eine auf einer Seite des Rohrstücks (1) angeordnete Schwenkachse schwenkbar sind, wobei die Schwenkachsen übereinander und zueinander parallel verlaufen.

9. Deckelloser Einfüllstutzen mit verzögert schließender Verschlussklappe nach einem der vorhergehenden Ansprüche, **dadurch gekennzeichnet, dass** die obere Verschlussklappe (2) und die untere Verschlussklappe (3) jeweils um eine auf unterschiedlichen, insbesondere gegenüberliegenden Seiten des Rohrstücks (1) angeordnete Schwenkachse schwenkbar sind, wobei die Schwenkachsen übereinander und zueinander windschief oder parallel verlaufen.

10. Deckelloser Einfüllstutzen für einen Stutzen eines Behälters, insbesondere eines Tanks eines Kraftfahrzeugs mit einem längst einer Stutzenachse (S) verlaufenden Rohrstück (1) und einem Verschlussmechanismus, der eine obere Verschlussklappe (2) und eine darunter angeordnete untere Verschlussklappe (3) aufweist, wobei zumindest die untere Verschlussklappe (3) als dichtende Klappe ausgebildet ist und die obere Verschlussklappe (2) und die untere Verschlussklappe (3) durch das Einführen eines Füllrohres (4) in das Rohrstück (1) gegen eine Rückstellkraft zum Öffnen des Verschlussmechanismus schwenkbar sind, **dadurch gekennzeichnet, dass** zwischen der oberen Verschlussklappe (2) und der unteren Verschlussklappe (3), an der der Schwenkachse der oberen Verschlussklappe (2) gegenüberliegenden Seite des Rohrstücks (1) um eine Schwenkachse schwenkbar, ein Öffnungshebel (7) angeordnet ist, der mit einem freien Ende in die Bewegungsbahn des Füllrohrs (4) ragt und durch das eingeschobene Füllrohr (4) in Richtung der unteren Verschlussklappe (3) verschwenkt wird, wobei das freie Ende so lang ist, dass es im Abstand zur Schwenkachse der unteren Verschlussklappe (3) auf diese auftrifft und die untere Verschlussklappe (3) aufstößt und wobei der Öffnungshebel (7) und das Rohrstück (1) derart ausgebildet sind, dass der Öffnungshebel (7) bei weiter durch die untere Verschlussklappe (3) eingeschobenen Füllrohr (4) neben dem ein gesteckten Füllrohr (4) angeordnet ist und bei Herausziehen des Füllrohrs (4) sich der Öffnungshebel (7) zunächst in die Bewegungsbahn der unteren Verschlussklappe (3) bewegt und anschließend, die untere Verschlussklappe (3) verzögert schließend in die Ruheposition zurückfedert.

11. Deckelloser Einfüllstutzen mit verzögert schließender Verschlussklappe nach einem der vorhergehenden Ansprüche, **dadurch gekennzeichnet, dass** der Öffnungshebel (7) ein gebogener oder rechtwinkliger Kniehebel ist, der mit einem nach unten gerichteten freien Ende an der Innenseite des Rohrstücks (1) angelenkt ist, während er sich mit einem gegenüberliegenden freien Ende in Ruheposition in Richtung der Stutzenachse erstreckt.

## Claims

1. A coverless filler neck for a neck of a container, in particular of a tank of a motor vehicle, with a pipe section (1) running along a neck axis (S) and with a closure mechanism, which has an upper closure flap (2) and a lower closure flap (3) arranged therebeneath at a distance hereto, constructed as a sealing flap, wherein the upper closure flap (2) and the lower closure flap (3) are swivellably mounted for opening respectively about a swivel axis and are swivellable against a restoring force for opening the closure mechanism by the introduction of a filler pipe (4) into the pipe section (1), **characterized in that** the upper closure flap is constructed and mounted such that with a closed upper closure flap (2) and along a first swivelling path it is not in direct or indirect contact with the lower closure flap (3) and along a second swivelling path adjoining the first swivelling path it rests with a force transmission section (5) onto a pressure region (6) of the lower closure flap (3) at a distance from its swivel axis (S) onto the movable part of the lower closure flap (3) such that the latter is also opened at least by a few angular degrees without the influence of the filler pipe (4), whilst the upper closure flap (2) is moved along the second swivelling path.

2. The coverless filler neck with delayed-closing closure flap according to Claim 1, **characterized in that** the upper closure flap has a width which is greater than the distance of the swivel axis of the upper closure flap (2) to the pressure region (6) of the lower closure flap (3) and the edge region of the upper closure flap (2), lying opposite the swivel axis, forms the force transmission section (5), wherein during the swivelling movement of the upper closure flap (2) the edge region forming the force transmission section (5) is moved along a partial circular path and that to the pressure region (6) is intersected by the partial circular path or lies above the partial circular path, so that the upper closure flap, starting from a position between the closed state and the maximum opening angle presses onto the pressure region (6), displacing the latter downwards and partially opening the lower closure flap (3).

3. The coverless filler neck with delayed-closing closure flap according to one of the two preceding claims, **characterized in that** between the upper closure flap (2) and the lower closure flap (3) a pressure element is arranged, mounted displaceably on the pipe section (1), in particular in the form of a force transmission pin or a force transmission sleeve, wherein the upper closure flap (2) in the course of the swivelling movement brings the stop against the pressure element and then presses the latter downwards in the opening direction during the further swivelling movement, and wherein the lower closure flap (3) is constructed and arranged such that the pressure element, which is displaced downwards by the upper closure flap (2), swivels the lower closure flap (3) at least slightly in the opening direction and hence slightly opens it.

4. The coverless filler neck with delayed-closing closure flap according to one of the preceding claims, **characterized in that** the upper closure flap (2) has an elevation in the form of a convex surface or of an upwardly projecting pin-shaped displacement means in the region of the impacting area of the inserted filler pipe (4), so that the upper closure flap (2) remains opened over a greater displacement path of the filler pipe (4) and at the same time holds the lower closure flap (3) slightly open.

5. The coverless filler neck with delayed-closing closure flap according to one of the preceding claims, **characterized in that** the upper closure flap (2) has a flap body which is provided circumferentially with a laterally projecting flange, on the upper side of which a seal is arranged for the upper closure flap (2), wherein the region of the flange lying opposite the swivel axis forms with its underside the force transmission section (5).

6. The coverless filler neck with delayed-closing closure flap according to the preceding claim, **characterized in that** a pressure piece is provided, which has on an upper side the pressure area (6) for supporting the force transmission section (5) and presses with a force transmission element onto the movable part of the lower closure flap (3) at a distance from its swivel axis.

7. The coverless filler neck with delayed-closing closure flap according to the preceding claim, **characterized in that** the pressure piece is mounted swivellably in the pipe section (1).

8. The coverless filler neck with delayed-closing closure flap according to one of the preceding claims, **characterized in that** the upper closure flap (2) and the lower closure flap (3) are swivellable respectively about a swivel axis arranged on one side of the pipe section (1), wherein the swivel axes run one over another and parallel to one another.

9. The coverless filler neck with delayed-closing closure flap according to one of the preceding claims, **characterized in that** the upper closure flap (2) and the lower closure flap (3) are swivellable respectively about a swivel axis arranged on different, in particular opposite, sides of the pipe section (1), wherein the swivel axes run one over another and skew or parallel to one another.

10. A coverless filler neck for a neck of a container, in particular of a tank of a motor vehicle with a pipe section (1) running along a neck axis (S) and with a closure mechanism, which has an upper closure flap (2) and a lower closure flap (3) arranged therebeneath, wherein at least the lower closure flap (3) is constructed as a sealing flap and the upper closure flap (2) and the lower closure flap (3) are swivellable against a restoring force for opening the closure mechanism by the introduction of a filler pipe (4) into the pipe section (1), **characterized in that** between the upper closure flap (2) and the lower closure flap (3), on the side of the pipe section (1) lying opposite the swivel axis of the upper closure flap (2), swivellably about a swivel axis, an opening lever (7) is arranged, which projects by a free end into the path of movement of the filler pipe (4) and is swivelled by the inserted filler pipe (4) in the direction of the lower closure flap (3), wherein the free end is so long that at a distance from the swivel axis of the lower closure flap (3) it impinges onto the latter and pushes the lower closure flap (3) open, and wherein the opening lever (7) and the pipe section (1) are constructed such that the opening lever (7), with filler pipe (4) inserted further through the lower closure flap (3), is arranged adjacent to the inserted filler pipe (4), and on withdrawing of the filler pipe (4) the opening lever (7) initially moves into the path of movement of the lower closure flap (3) and subsequently springs back into the position of rest closing the lower closure flap (3) in a delayed manner.

11. The coverless filler neck with delayed-closing closure flap according to one of the preceding claims, **characterized in that** the opening lever (7) is a curved or right-angled bent lever, which is articulated by a downwardly directed free end on the inner side of the pipe section (1), whilst it extends by an opposite free end in the position of rest in the direction of the neck axis.

## Revendications

1. Embout de remplissage sans couvercle pour un embout de récipient, notamment d'un réservoir d'un véhicule automobile comportant une pièce tubulaire (1) s'étendant le long d'un axe d'embout (S) et un mécanisme d'obturation, qui présente un clapet d'obturation supérieur (2) et un clapet d'obturation inférieure (3) disposé en espacement sous celui-ci, conçu comme un clapet d'étanchéité, dans lequel le clapet d'obturation supérieur (2) et le clapet d'obturation inférieur (3) pour s'ouvrir sont positionnés respectivement de manière pivotante autour d'un axe de pivotement et peuvent être pivotés au moyen de l'introduction d'un tuyau de remplissage (4) dans la pièce tubulaire (1) en sens inverse à une force de rappel élastique pour ouvrir le mécanisme d'obturation, **caractérisé en ce que** le clapet d'obturation supérieure est conçu et positionné de telle sorte qu'il ne se trouve pas, lorsque le clapet d'obturation supérieure (2) est fermé, et le long d'une première course de pivotement, en contact direct ou indirect avec le clapet d'obturation inférieur (3) et le long d'une deuxième course de pivotement se rattachant à la première course de pivotement s'appuie par une portion de transmission de force (5) de telle sorte sur une zone de pression (6) du clapet d'obturation inférieur (3) en espacement par rapport à l'axe de pivotement (S) de ce dernier sur la partie mobile du clapet d'obturation intérieur (3) de telle sorte que celui-ci soit ouvert même sans influence du tuyau de remplissage (4) au moins de quelques degrés angulaires, alors que le clapet d'obturation supérieure (2) est déplacé le long de la deuxième course de pivotement.

2. Embout de remplissage sans couvercle avec clapet d'obturation se fermant avec retard selon la revendication 1, **caractérisé en ce que** le clapet d'obturation supérieure présente une largeur, qui est plus grande que l'espacement de l'axe de pivotement du clapet d'obturation supérieur (2) par rapport à la zone de pression (6) du clapet d'obturation inférieur (3) et la zone de bord en vis-à-vis de l'axe de pivotement du clapet d'obturation supérieur (2) forme la portion de transmission de force (5), dans lequel pendant le mouvement de pivotement du clapet d'obturation supérieur (2) la zone de bord formant la portion de transmission de force (5) est déplacée le long d'une piste en demi-cercle et est découpée à partir de la zone de pression (6) par la piste en demi-cercle ou est située au-dessus de la piste en demi-cercle, de telle sorte que le clapet d'obturation supérieur à partir d'une position entre l'état fermé et l'angle d'ouverture maximale presse sur la zone de pression (6), en refoulant celle-ci vers le bas et en ouvrant partiellement le clapet d'obturation inférieur (3).

3. Embout de remplissage sans couvercle avec clapet d'obturation se fermant avec retard selon une des deux revendications précédentes, **caractérisé en ce que** entre le clapet d'obturation supérieur (2) et le clapet d'obturation inférieur (3), un élément de pression positionné de manière coulissante sur la pièce tubulaire (1), notamment sous la forme d'une goupille de transmission de force ou d'un manchon de transmission de force est disposé, dans lequel le clapet d'obturation supérieur (2) au cours du mouvement de pivotement atteint la butée sur l'élément de pression et presse celle-ci vers le bas pendant la poursuite du mouvement de pivotement dans la direction d'ouverture, et dans lequel le clapet d'obturation inférieur (3) est conçu et disposé de telle sorte que l'élément de pression refoulé vers le bas par le clapet d'obturation supérieur (2) pivote le clapet d'obturation inférieure (3) au moins de manière minime dans la direction d'ouverture et l'ouvre ainsi de manière minime.

4. Embout de remplissage sans couvercle avec clapet d'obturation se fermant avec retard selon une revendication précédente, caractérisé ce que le clapet d'obturation supérieur (2) présente au niveau de la surface d'impact du tuyau de remplissage enfiché (4) un méplat sous la forme d'une surface convexe ou d'un moyen de refoulement en forme de goupille dépassant en saillie vers le haut, de telle sorte que le clapet d'obturation supérieur (2) reste ouvert sur un plus grand trajet de coulissement du tuyau de remplissage (4) et maintienne simultanément ouvert au minimum le clapet d'obturation inférieur (3).

5. Embout de remplissage sans couvercle avec clapet d'obturation se fermant avec retard selon une des revendications précédentes, caractérisé ce que le clapet d'obturation supérieur (2) présente un corps de clapet, qui est pourvu sur sa circonférence d'une bride faisant saillie latéralement, sur le côté supérieur de laquelle un joint d'étanchéité pour le clapet d'obturation supérieur (2) est disposé, dans lequel la zone de la bride en vis-à-vis de l'axe de pivotement forme avec son côté inférieur la portion de transmission de force (5).

6. Embout de remplissage sans couvercle avec clapet d'obturation se fermant avec retard selon la revendication précédente, caractérisé ce que une pièce de pression est prévue, qui présente sur son côté supérieur la surface de pression (6) pour appuyer la portion de transmission de force (5) et presse avec un organe de transmission de force sur la partie mobile du clapet d'obturation inférieur (3) en espacement par rapport à l'axe de pivotement de ce dernier.

7. Embout de remplissage sans couvercle avec clapet d'obturation se fermant avec retard selon la revendication précédente, **caractérisé en ce que** la pièce de pression est positionnée de manière pivotante dans la pièce tubulaire (1).

8. Embout de remplissage sans couvercle avec clapet d'obturation se fermant avec retard selon une des revendications précédentes, caractérisé ce que le clapet d'obturation supérieur (2) et le clapet d'obturation inférieur (3) peuvent être pivoté respectivement autour d'un acte pivotement disposé sur un côté de la pièce tubulaire (1), dans lequel les axes de pivotement s'étendent les uns au-dessus des autres et parallèlement les uns aux autres.

9. Embout de remplissage sans couvercle avec clapet d'obturation se fermant avec retard selon une des revendications précédentes, caractérisé ce que le clapet d'obturation supérieur (2) et le clapet d'obturation inférieur (3) peuvent être pivotés respectivement autour d'un axe de pivotement différent, disposé notamment sur des côtés en vis-à-vis de la pièce tubulaire (1), dans lequel les axes de pivotement s'étendent les uns au-dessus des autres et en inclinaison ou parallèlement les uns aux autres.

10. Embout de remplissage sans couvercle pour un embout de récipient, notamment d'un réservoir d'un véhicule automobile comportant une pièce tubulaire (1) s'étendant le long d'un axe d'embout (S) et un mécanisme d'obturation, qui présente un clapet d'obturation supérieur (2) et un clapet d'obturation inférieur disposé sous celui-ci, dans lequel au moins le clapet d'obturation inférieur (3) est conçu comme un clapet d'étanchéité et le clapet d'obturation supérieur (2) et le clapet d'obturation inférieur (3) peuvent être pivotés au moyen de l'introduction d'un tuyau de remplissage (4) dans la pièce tubulaire (1) en sens inverse à une force de rappel élastique pour ouvrir le mécanisme d'obturation, caractérisé ce que entre le clapet d'obturation supérieur (2) et le clapet d'obturation intérieur (3), pivotant autour d'un axe de pivotement sur le côté de la pièce tubulaire (1) en vis-à-vis de l'axe de pivotement du clapet d'obturation supérieur (2), un levier d'ouverture (7) est disposé, qui dépasse par une extrémité libre dans la voie de mouvement du tuyau de remplissage (4) et est pivoté au moyen du tuyau de remplissage inséré (4) dans la direction du clapet d'obturation inférieur (3), dans lequel l'extrémité libre est assez longue pour que en espacement par rapport à l'axe de pivotement du clapet d'obturation inférieur (3), elle bute sur celui-ci et percute le clapet d'obturation inférieur (3) et dans lequel le levier d'ouverture (7) et la pièce tubulaire (1) sont conçus de telle sorte que le levier d'ouverture (7) sur la poursuite de l'insertion du tuyau de remplissage (4) à travers le clapet d'obturation inférieur (3) soit disposé à côté du tuyau de remplissage enfiché (4) et lors du retrait du tuyau de remplissage (4) le levier d'ouverture (7) est d'abord déplacé dans le trajet de mouvement du clapet d'obturation inférieur (3) et ensuite le clapet d'obturation inférieur (3) revient dans la position de repos en se fermant avec un retard.

11. Embout de remplissage sans couvercle avec clapet d'obturation se fermant avec retard selon une des revendications précédentes, caractérisé ce que le levier d'ouverture (7) est une genouillère arquée ou perpendiculaire, qui est raccordée de manière articulée par une extrémité libre dirigée vers le bas au côté intérieur de la pièce tubulaire (1), pendant qu'elle s'étend par une extrémité libre opposée dans la direction de repos dans la direction de l'axe d'embout.
